# EUROPÄISCHE PATENTSCHRIFT

(11) **EP 0 762 401 B1**
(45) Veröffentlichungstag und Bekanntmachung des Hinweises auf die Patenterteilung: **14.11.2001**
(21) Anmeldenummer: 96112695.0
(22) Anmeldetag: 07.08.1996
(51) Int. Cl.: G11B 7/135

(54) **Optische Abtasteinrichtung**
Optical pickup device
Dispositif de lecture optique

(30) Priorität: 22.08.1995 DE 19530740
(43) Veröffentlichungstag der Anmeldung: 12.03.1997
(73) Patentinhaber: DEUTSCHE THOMSON-BRANDT GMBH, 78048 Villingen-Schwenningen (DE)
(72) Erfinder: Dang, Lieu Kim, 78048 Villingen-Schwenningen (DE)

(56) Entgegenhaltungen:
- EP-A- 0 320 276
- EP-A- 0 459 764
- EP-A- 0 581 519

## Beschreibung

Die Erfindung betrifft eine Anordnung für eine optische Abtasteinrichtung zum Abtasten auf einem Aufzeichnungsträger gespeicherter Informationen oder zum Aufzeichnen von Informationen auf einen Aufzeichnungsträger, die eine Strahlungsquelle bzw. Lichtquelle zum Bereitstellen eines Abtaststrahls, Mittel zum Fokussieren des Abtaststrahls zu einem Abtastfleck und ein Detektionssystem mit einem holographischen optischen Element zum Empfang des vom Aufzeichnungsträger beeinflußten Abtaststrahls enthält. Derartige Abtasteinrichtungen sind in CD-Spielern und Video-Disc-Spielern oder entsprechenden Aufzeichnungseinrichtungen verwendbar.

Es ist bekannt, zum Abtasten optischer Aufzeichnungsträger holographische optische Elemente zu verwenden, mit denen der Abtaststrahl in Teilstrahlen zur Spurführung und oder zur Fokussierung sowie zum Erzeugen des Informationssignals zerlegt wird, vgl. EP-B-0 373 699, EP-B-0357 323 und EP-B-0 305 169. Diese Dokumente spiegeln den einleitenden Teil des Anspruchs 1 wieder . Holographische optische Elemente enthalten Gitter, die den vom Aufzeichnungsträger reflektierten Abtaststrahl in seiner Richtung auf ein Detektionssystem ablenken. Gitter bzw. holographische optische Elemente werden in optischen Abtasteinrichtungen insbesondere zum Verringern der Anzahl optischer Elemente verwendet, die zum Realisieren der optischen Abtasteinrichtung erforderlich sind. Durch das Verwenden von Gittern als Strahlablenkmittel oder als Strahlteilmittel werden im Zusammenhang mit einer Strahlteilung die Intensität des Abtaststrahls verringert und es entstehen Nebenstrahlen höherer Ordnung im Zusammenhang mit der Strahlablenkung durch ein Gitter. Zur Detektion sind mehrere geteilte Photodetektoren erforderlich, die mit hoher Genauigkeit anzuordnen sind und das Informationssignal wird durch Addition mittels mehrerer Detektoren gewonnener Teilsignale gebildet, wodurch das die abzutastende Information enthaltende Abtastsignal nachteilig beeinflußt wird.

Aufgabe der Erfindung ist es, die Nachteile bekannter Verfahren und Einrichtungen hinsichtlich der Gewinnung des Informationssignals und der Detektionseinrichtung zu beseitigen. Aspekte dieser Aufgabe sind die Auflösung der abzutastenden Elemente und das Unterdrücken von Störungen.

Diese Aufgabe wird mit den im unabhängigen Anspruch 1 angegebenen Mitteln gelöst. Vorteilhafte Aus- und Weiterbildungen sind in abhängigen Ansprüchen angegeben.

Es ist ein Aspekt der Erfindung, zur verbesserten Informationssignalgewinnung in hoch auflösenden Abtasteinrichtungen, wie beispielsweise digitalen Bildplattenspielern ein optisches Raumfilter zu verwenden. Mit dem optischen Raumfilter werden sowohl Störungen im Informationssignal eleminiert als auch die Auflösung der abzutastenden Elemente, wie beispielsweise Pits einer CD, erhöht. In einem Abtastsystem wird hierzu der Detektor vorzugsweise mit einem Schlitz abgedeckt oder ein in seinen Abmessungen der Schlitzbreite entsprechender Detektor verwendet, wobei die Schlitzbreite an die kürzeste Länge der abzutastenden Elemente angepaßt ist. Diese Anpassung besteht darin, daß die Schlitzbreite für die kürzeste Pitlänge bei vorgegebener numerischer Apertur mit einer normierten Modulationsübertragungsfunktion in Abhängigkeit von der Raumfrequenz für die beste Modulation ermittelt wird.

Das optische Raumfilter wirkt dann in der Abtasteinrichtung derart, daß der Fokuspunkt in der Schlitz- bzw. Spaltebene das konjugierte Bild des Abtastspots auf dem Aufzeichnungsträger ist, wobei nur die Größe des Fokuspunktes durch die Vergrößerung des abbildenden optischen Systems bestimmt wird und die Struktur der abzutastenden Elemente in der Schlitzebene wiedergegeben wird. In der Schlitzebene wird die Struktur der abzutastenden Elemente wiedergegeben und deren Ausschnit mit dem Schlitz bzw. Spalt selektiert bzw. gefiltert. Dadurch daß die Breite des Schlitzes so gewählt wird, daß nur ein Teil der Abbildung des abzutastenden Elementes den Detektor erreicht, werden darüber hinausgehende Anteile der Abbildung bzw. der Rest der Abbildung, der Störungen, wie beispielsweise Intersymbol- Interferenz oder Substratverunreinigungen repräsentiert, ausgeblendet und die Auflösung der abzutastenden Elemente erhöht. Es ist ein weiterer Aspekt auch in Abtastsystemen mit holographischen optischen Elementen die gesamte Fläche des Abtastflecks auf nur einem Detektor abzubilden und den vollständigen Lichtanteil zu nutzen, wodurch der Leistungsanteil erhöht und die Anforderungen hinsichtlich der Justage mehrerer Elemente zueinander verringert werden. Als dritter Aspekt wäre zu erwähnen, daß das holographische optische Element einen möglichst einfachen Aufbau aufweisen soll. Das optische Raumfilter wird vorzugsweise mit einem holographischen optischen Element realisiert, das mindestens ein im gesamten Detektionsstrahl eindimensionales Gitter aufweist, wobei unter einem eindimensionalen Gitter ein Gitter verstanden wird, das hinsichtlich seiner Eigenschaften über seine Gesamtfläche einheitlich beziehungsweise gleichmäßig ist. Ein derart eindimensionales Gitter wird dann vorzugsweise in einem seiner Teilbereiche durch ein weiteres Gitter zu einem zweidimensionalen Gitter ergänzt.

Mit dem eindimensionalen Gitter wird ein dem Abtast- oder Aufzeichnungspunkt vollständig entsprechender Lichtfleck gebildet, der zur Informationssignalgewinnung verwendet wird, so daß nur noch ein Detektor benötigt wird, der durch eine an den Lichtfleck angepaßte Form gleichzeitig zur Ausgrenzung von Störlicht verwendet werden kann. Die Anpassung an die Abmessungen des Lichtfleckes kann durch geeignete Wahl der Breite des Detektors oder durch Abdecken des Detektors mit einem Schlitz erfolgen. Es ist grundsätzlich auch möglich, das holographische optische Element mit einem nicht an den Lichtfleck angepaßten Detektor zu kombinieren, wodurch jedoch dann ein elektronischer Equalizer als Filter zur Informationssignalgewinnung erforderlich wird.

Auch die Verwendung des optischen Raumfilters ist grundsätzlich in Abtasteinrichtungen ohne holographische optische Elemente möglich, wobei dann jedoch besondere Anforderungen an die thermische Stabilität des Systems zu stellen sind, um einzuhaltenden Genauigkeitsanforderungen im großen Temperaturbereich zu entsprechen.

Durch das Verwenden nur eines Detektors, der einstückig ohne Teilung ausgeführt ist, kann in vorteilhafter Weise die Anzahl zueinander auszurichtender Elemente verringert werden. Da dennoch eine Justage zu weiteren Detektoren, wie beispielsweise des Fokusfehlerdetektors zum Informationssignaldetektor erforderlich ist, werden diese vorzugsweise in einem Winkel zueinander angeordnet, um eine Justage durch Verschieben in einer Ebene zu ermöglichen.

Die Realisierung des optischen Raumfilters im Zusammenhang mit dem erwähnten optischen holographischen Element ist insbesondere aufgrund der thermischen Probleme bekannter Abtastvorrichtungen vorteilhaft.

Die Anwendung des optischen Raumfilters ist grundsätzlich nicht auf den die Information des Aufzeichungsträgers tragenden Lichtstrahl beschränkt.

Nachfolgend wird die Erfindung anhand von Zeichnungen näher erläutert.

Es zeigen:
- Fig. 1: Prinzipskizze einer Anordnung zur Durchführung des Verfahrens,
- Fig. 2: Prinzipskizze einer Detektoranordnung,
- Fig. 3: Prinzipskizze eines bekannten Abtastsystems,
- Fig. 4: Prinzipskizze einer Nachweisanordnung,
- Fig. 5: Augenoszillogramm ohne optisches Raumfilter,
- Fig. 6: Augenoszillogramm mit optischem Raumfilter,
- Fig. 7: Amplituden-Zeitverteilung des Augenoszillogramms ohne optisches Raumfilter,
- Fig. 8: Amplituden-Zeitverteilung des Augenoszillogramms mit optischem Raumfilter.

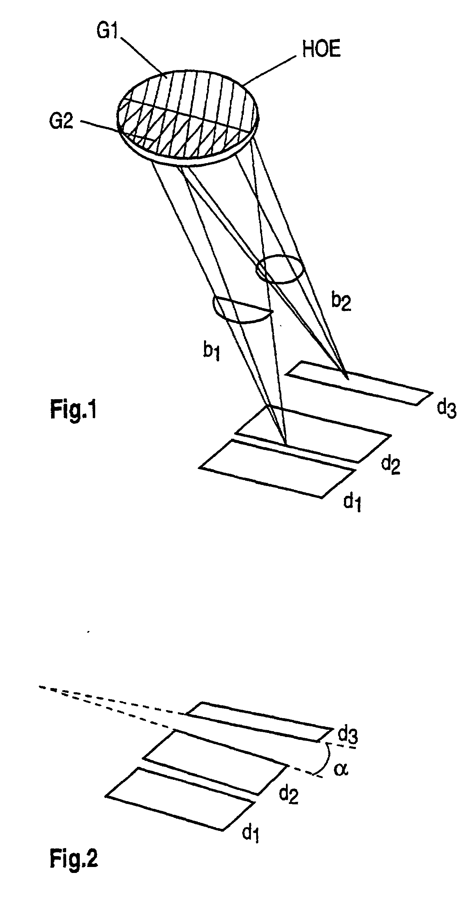

Fig.1 entsprechend weist das Abtastsystem ein holographisches optisches Element HOE auf, das im gesamten Bereich des holographischen optischen Elements HOE ein erstes eindimensionales Gitter G1 aufweist. Nur in einem Teilbereich des holographischen optischen Elements HOE ist ein zweites Gitter G2 vorgesehen, welches vorzugsweise ebenfalls als zweites eindimensionales Gitter G2 vorgesehen ist und in diesem Bereich mit dem sich über das gesamte holographische optische Element HOE erstreckenden eindimensionalen Gitter G1 ein zweidimensionales Gitter aus Gitter G1 und Gitter G2 bestehend bildet. Die Gitter G1 und G2 sind vorzugsweise Phasengitter, können aber auch von Amplitudengittern gebildet werden. Mit dem eindimensionalen Gitter G1 wird das Ausbilden eines den Abtastpunkt vollständig wiedergebenden Strahls b2 erreicht, der das Informationssignal repräsentiert und mit nur einem einzelnen Detektor d3 detektiert wird. Der von einem Gesamtanteil ausgehende Lichtstrahl ist in der Fig.1 durch einen Kreis im Strahlengang des Strahls b2 dargestellt. Durch Anpassen der Breite des Photodetektors d3 an den vom Strahl b2 gebildeten Lichtfleckdurchmesser bzw. an die abzutastenden Elemente werden von Nebenstrahlen oder von benachbarten Abtastelementen ausgehende Störungen ausgrenzt. Dieses Prinzip wird auch als Raumfilter bezeichnet. Durch die besondere Verwendung eines Raumfilters zum Bereitstellen eines Informationssignals wird trotz der von Gittern ausgehenden Nachteile hinsichtlich Beugungs- und Teilungsverluste ein den Abtastort vollständig repräsentierender Lichtfleck vom Strahl b2 gebildet, der durch Anpassung des Detektors d3 an die Abmessungen des Lichtfleckes bzw. an die abzutastenden Elemente vorteilhaft zum Ausgrenzen von Störungen durch Nebeneinflüsse verwendet werden kann. Es ist keine spezielle Justage des Detektors erforderlich, da nur ein einzelner Detektor d3 verwendet werden kann.

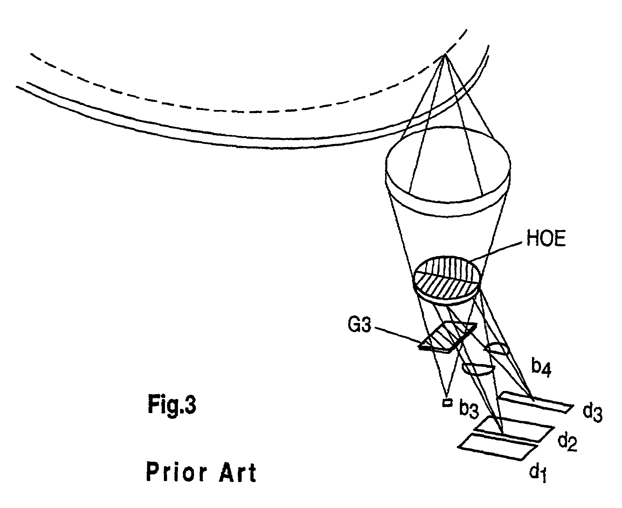

Zur Fokusfehlersignalerzeugung weist eine Hälfte des holographischen optischen Elements HOE ein zweites Gitter G2 auf, welches in diesem Bereich mit dem ersten eindimensionalen Gitter G1 ein zweidimensionales Gitter bildet. Der von dieser Hälfte des holographischen optischen Elements HOE ausgehende Lichtanteil bzw. Strahl b2 repräsentiert folglich auch nur eine Hälfte des Abtaststrahls. Dies ist in Figur 1 durch einen Halbkreis im Strahlengang b1 angedeutet, der auf den aus zwei Detektoren d1 und d2 bestehenden Fokusfehlerdetektor gerichtet ist. Der Fokusfehlerdetektor und der Informationssignaldetektor sind vorzugsweise in einer Ebene angeordnet. Um dennoch eine optimale Anpassung der Breite des Detektors d3 an den vom Strahl b2 gebildeten Lichtfleck zur Informationssignalgewinnung vornehmen zu können, ist der Detektor d2 in einem Winkel α zum Fokusfehlersignaldetektor bzw. mit einem Abstand in einem Winkel α zu der von den Detektoren d1 und d2 gebildeten Mittellinie zwischen ihnen angeordnet, vgl. Fig. 2. Dadurch wird die Justage vorteilhafter Weise in einer Ebene ermöglicht obwohl eine Lichtfleckgrößenänderung insbesondere vom Abstand zum holographischen optischen Element HOE bestimmt wird. Das Wesen der Erfindung wird besonders deutlich, wenn man im Unterschied dazu eine in Fig.3 dargestellte Anordnung betrachtet. Fig.3 enthält ein holographisches optisches Element HOE, das in jeweils einer Hälfte ein eindimensionales Gitter aufweist, wobei diese Gitter dem bekannten Stand der Technik entsprechend jedoch eine Gitterstruktur aufweisen, die entweder in ihrer Richtung oder Form zu jener der anderen Hälfte unterschiedlich ist. Damit werden zwei Detektionsstrahlen b3 und b4 erzeugt, die jedoch jeweils nur eine Hälfte des Abtaststrahls repräsentieren. Dies ist in Fig.3 durch die Halbkreise in den Detektionsstrahlen b3 und b4 angedeutet. Um neben dem Informationssignal auch ein Fokusfehlersignal bereitstellen zu können, ist im Detektionsstrahl b3 ein Gitter G3 vorgesehen, das mit dem Gitter des holographischen optischen Elements HOE ein zweidimensionales Gitter bildet, wobei analog zu Fig.1 mit dem zweidimensionalen Gitter ein Fokusfehler repräsentierender Lichtfleck gebildet wird. Mittels der Detektoren d1 und d2 werden dann dem bekannten doppelt Foucault Verfahren entsprechend Fokusfehlersignale bereitgestellt. Dadurch, daß im Gegensatz zur vorgeschlagenen Lösung kein sich über die Gesamtfläche des holographischen optischen Elementes HOE erstreckendes eindimensionales Gitter G1 vorgesehen ist, kann ein nur mit einer Hälfte des holographischen optischen Elementes HOE gebildeter Detektionsstrahl b4 nur eine Hälfte des Abtaststrahls repräsentieren, so daß der Abtastpunkt nicht vollständig wiedergegeben wird und eine verminderte Lichtleistung zu verzeichnen ist. Darüber hinaus weist ein von einer kreisförmigen Lichtverteilung ausgehender Lichtfleck eine geringere Anzahl von Nebenmaxima auf als sie von einem halbkreisförmigen Lichtverteilung ausgehen.

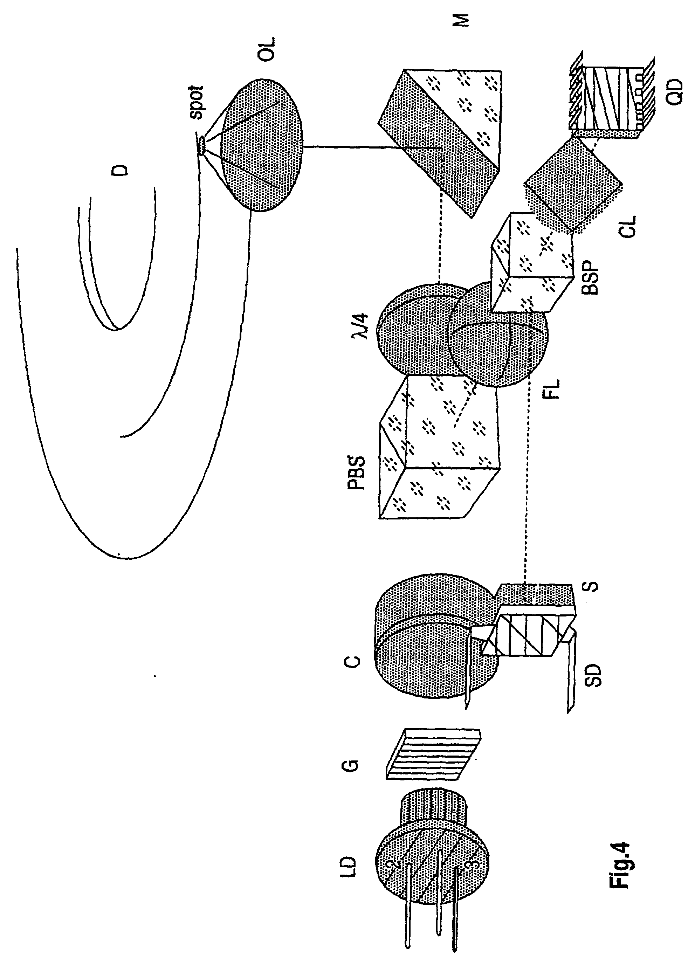

Eine in Fig. 4 angegebene Nachweisanordnung zur Wirkung des optischen Raumfilters macht deutlich, daß die Verwendung des optischen Raumfilters nicht auf die Anwendung im Zusammenhang mit einer ein holographisches optisches Element verwendenden Abtasteinrichtung beschränkt ist. Auch die in Fig. 4 dargestellte Anordnung kann grundsätzlich zur optischen Abtastung von Aufzeichnungsträgern hoher Speicherdichte verwendet werden. Die Nachteile dieser Anordnung bestehen jedoch in ihrer thermischen Instabilität, so daß der ein holographisches optisches Element verwendenden Abtasteinrichtung der Vorzug zu geben wäre. Dennoch wurde der Nachweis der von der Verwendung eines optischen Raumfilters ausgehenden überraschenden Wirkung mit der in Fig. 4 angegebenen Anordnung geführt.

Gemäß Fig. 4 wird das von der Disk D reflektierte Licht des Lasers LD über den Polarisationsstrahlteiler PBS auf eine Fokuslinse FL gelenkt und mit einem Strahlteiler BSP in zwei Teile aufgeteilt. Ein erster Teil passiert eine Zylinderlinse CL und wird auf einem Quadrantendetektor QD fokussiert, mit dem die Servosignale gewonnen werden. Der zweite Teil wird auf einem einfachen Detektor SD umgelenkt, der zur Bildung eines Raumfilters mit einem Spalt bzw. Schlitz S abgedeckt ist. Zum Vergleich der Eigenschaften der Abtasteinrichtung mit und ohne Raumfilter wurde die gleiche Anordnung gemäß Fig.4 ohne den Spalt bzw. Schlitz S verwendet. Vom Detektor SD wird das Abtast- bzw. Informationssignal bereitgestellt und die Anordnung gemäß Fig. 4 weist die weiteren Elemente einer Abtasteinrichtung wie Gitter G, Collimator C, λ/4 Scheibe λ/4, Ablenkspiegel M und Objektivlinse OL auf.

Der Spalt bzw. Schlitz S ist senkrecht zur Informationsspur auf der Disk D angeordnet und weist eine an die kürzeste Pitlänge angepaßte Breite auf. Bei einer kürzesten Pitlänge von 0,48 um wird vorzugsweise eine Schlitzbreite von 15 µm verwendet. Die optimale Schlitzbreite wird bei vorgegebener numerischer Apertur der Objektlinse OL und der Fokuslinse FL mit einer normierten Modulationsübertragungsfunktion in Abhängigkeit von der Raumfrequenz für die beste Modulation ermittelt.

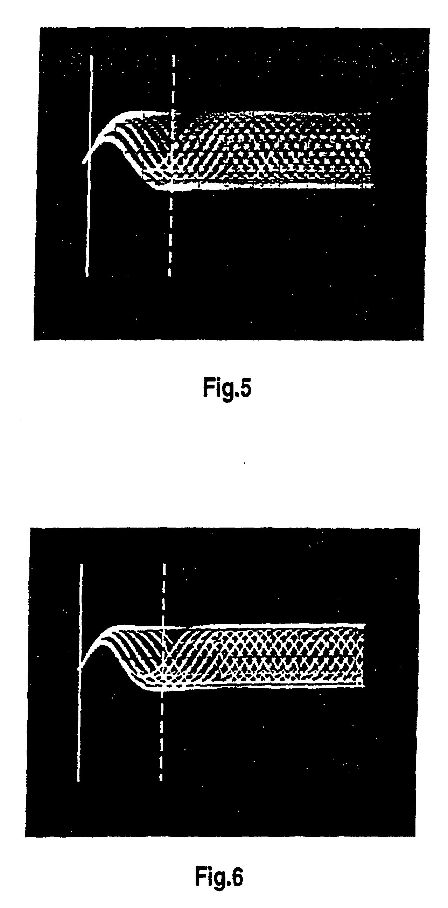

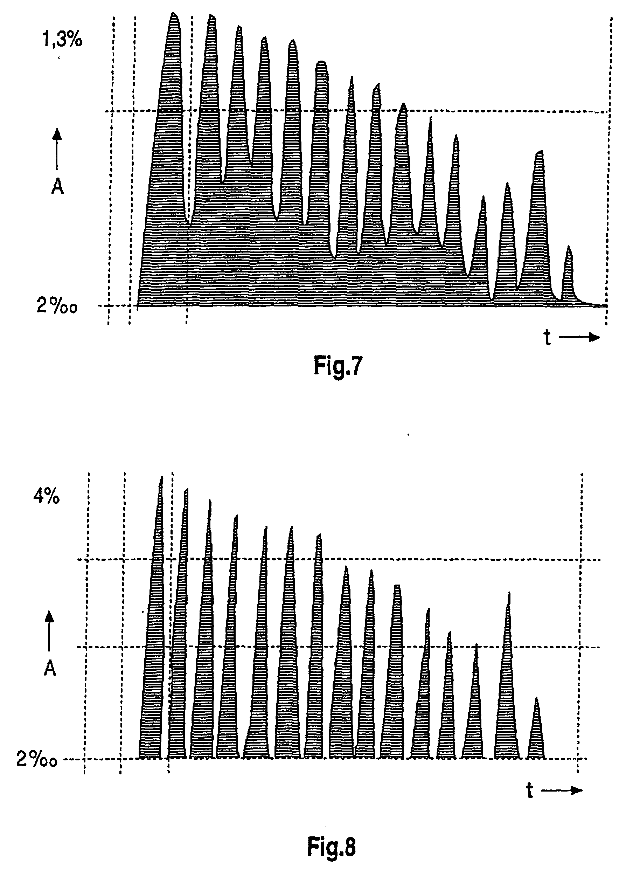

Die vorteilhaften und überraschenden Ergebnisse der Verwendung eines optischen Raumfilters in einer Ablenkeinrichtung werden anhand der Fig. 5 bis 8 deutlich. Aus der Gegenüberstellung Fig. 5 und Fig. 6 ist ersichtlich, daß die Augen des mit dem optischen Raumfilter erzeugten Signals weiter geöffnet sind. Das bedeutet, daß mit dem Raumfilter die Signale höherer Frequenz stärker angehoben werden. Die Darstellung der Amplituden A über der Zeit t gemäß Fig. 7 und fig. 8 gibt die Pulsbreitenverteilung an. Während das ungefilterte Augensignal nur unvollständig getrennte Pulse zeigt, was zu einer erhöhten Fehlerrate bzw. zu fehlerhafter Dekodierung führt, weist das gefilterte Augensignal scharfe getrennte Spitzen bzw. sogenannte Peaks auf. Die Standardabweichung ist annähernd um die Hälfte verringerten und die Amplitude um nahezu 3 % erhöht. Dies bedeutet, daß mit dem optischen Raumfilter bzw. mit dem Schlitz bzw. Spalt S vor dem Detektor SD nicht nur Störsignale bzw. Störkomponenten ausgeblendet werden, sondern das Abtastsignal wesentlich verbessert wird. Dadurch ist das optische Raumfilter besonders vorteilhaft in optischen Abtasteinrichtungen, wie beispielsweise digitalen Bildplattenspielern, die Aufzeichnungsträger hoher Speicherdichte abtasten, anwendbar. Da auch die Aufzeichnung von Informationen eine hohe Signalqualität erfordert, ist das Anwendungsgebiet nicht auf Abspielgeräte beschränkt und umfaßt Aufzeichnungsgeräte gleichermaßen.

## Patentansprüche

1. Anordnung für eine optische Abtasteinrichtung zum Abtasten auf einem Aufzeichnungsträger gespeicherter Informationen oder zum Aufzeichnen von Informationen auf einen Aufzeichnungsträger, die eine Strahlungsquelle bzw. Lichtquelle zum Bereitstellen eines Abtaststrahls, Mittel zum Fokussieren des Abtaststrahls zu einem Abtastfleck und ein Detektionssystem mit einem holographischen optischen Element (HOE) zum Empfang des vom Aufzeichnungsträger beeinflußten Abtaststrahls enthält, **dadurch gekennzeichnet, daß** das holographische optische Elementes (HOE) mit einem sich über die Gesamtfläche des holographischen optischen Elementes (HOE) erstreckenden eindimensionalen Gitter (G1) gebildet ist.

2. Anordnung nach Anspruch 1, **dadurch gekennzeichnet, daß** das Detektionssystem einen Detektor (d3) aufweist, der in seiner Breite an einen Lichtfleckdurchmesser angepaßt ist, der mit dem sich über die Gesamtfläche des holographischen optischen Elementes (HDE) erstreckenden eindimensionalen Gitter (G1) gebildet ist.

3. Anordnung nach Anspruch 1, **dadurch gekennzeichnet, daß** das holographische optische Element (HOE) ein sich über die Gesamtfläche des holographischen optischen Elementes (HOE) erstreckendes erstes eindimensionalen Gitter (G1) und ein sich über eine Hälfte des holographischen optischen Elementes (HOE) erstreckendes zweites eindimensionalen Gitter (G2) aufweist, wobei das erste eindimensionale Gitter (G1) zum Gewinnen eines die Information des Aufzeichnungsträgers repräsentlerenden Lichtflecks vorgesehen ist und das zweite eindimensionale Gitter (G2) mit dem ersten eindimensionalen Gitter (G1) ein zweidimensionales Gitter bildet, welches zum Bilden eines einen Fokusfehler repräsentierenden Lichtfleckes vorgesehen ist.

## Claims

1. Arrangement for an optical scanning device for scanning information which is stored on a recording medium or for recording information on a recording medium, which optical scanning device contains a radiation source or light source for providing a scanning beam, means for focusing the scanning beam to form a scanning spot, and a detection system having a holographic optical element (HOE) for receiving the scanning beam which has been influenced by the recording medium, **characterized in that** the holographic optical element (HOE) has a one-dimensional grating (G1) which extends over the entire area of the holographic optical element (HOE).

2. Arrangement according to Claim 1, **characterized in that** the detection system has a detector (d3), whose width is matched to a light spot diameter which is formed with the one-dimensional grating (G1) which extends over the entire area of the holographic optical element (HOE).

3. Arrangement according to Claim 1, **characterized in that** the holographic optical element (HOE) has a first one-dimensional grating (G1) which extends over the entire area of the holographic optical element (HOE), and has a second one-dimensional grating (G2) which extends over half the holographic optical element (HOE), the first one-dimensional grating (G1) being intended for obtaining a light spot which represents the information of the recording medium, and the second one-dimensional grating (G2) forming a two-dimensional grating with the first one-dimensional grating (G1), which two-dimensional grating is intended for forming a light spot which represents a focusing error.

## Revendications

1. Aménagement pour un dispositif de lecture optique, permettant de lire des informations stockées sur un support d'enregistrement ou permettant d'enregistrer des informations sur un support d'enregistrement, ce dispositif contenant une source de rayonnement ou une source lumineuse qui fournit un faisceau d'exploration, des dispositifs de réglage du faisceau de lecture sur un point de balayage et un système de détection avec un élément optique holographique (HOE) pour la réception du faisceau d'exploration influencé par le support d'enregistrement, **caratérisé en ce que** l'élément optique holographique (HOE) est constitué par une grille (G1) à une dimension s'étendant sur l'ensemble de l'élément optique holographique (HOE).

2. Aménagement conforme à la revendication 1, **caractérisé en ce que** le système de détection présente un détecteur (d3) dont la largeur est adaptée à un diamètre de spot lumineux qui est constitué par la grille (G1) à une dimension s'étendant sur l'ensemble de l'élément optique holographique (HOE).

3. Aménagement conforme à la revendication 1, **caractérisé en ce que** l'élément optique holographique (HOE) présente une première grille (G1) à une dimension s'étendant sur l'ensemble de l'élément optique holographique (HOE) et une seconde grille (G2) à une dimension s'étendant sur une moitié de l'élément optique holographique (HOE), où la première grille (G1) à une dimension est prévue pour l'acquisition d'un spot lumineux représentant l'information du support d'enregistrement et la seconde grille (G2) à une dimension constitue, avec la première grille (G1) à une dimension, une grille à deux dimensions qui est prévue pour constituer un spot lumineux représentant un défaut de mise au point.
